# EUROPÄISCHE PATENTSCHRIFT

(11) **EP 3 599 144 B1**
(45) Veröffentlichungstag und Bekanntmachung des Hinweises auf die Patenterteilung: **23.08.2023**
(21) Anmeldenummer: 19176077.6
(22) Anmeldetag: 23.05.2019
(51) Int. Cl.: B62D 15/02, G08G 1/16

(54) **ERKENNUNG EINES STATUS EINES GARAGENTORES BEIM AUTONOMEN EINPARKEN**
DETECTION OF A STATUS OF A GARAGE DOOR DURING AUTONOMOUS PARKING
DÉTECTION DE L'ÉTAT D'UN PORTAIL DE GARAGE LORS DU STATIONNEMENT AUTONOME

(30) Priorität: 25.07.2018 DE 102018117930
(43) Veröffentlichungstag der Anmeldung: 29.01.2020
(73) Patentinhaber: Valeo Schalter und Sensoren GmbH, 74321 Bietigheim-Bissingen (DE)
(72) Erfinder: BARIANT, Jean Francois, 74321 Bietigheim-Bissingen (DE); HUGHES, Ciaran, 0000 Tuam (IE); PRINZHAUSEN, Stefanie, 74321 Bietigheim-Bissingen (DE); ILIE, Mihai, 0000 Tuam (IE)
(74) Vertreter: Pothmann, Karsten

(56) Entgegenhaltungen:
- DE-A1-102016 100 235
- DE-A1-102016 114 160
- US-A1- 2017 334 380

## Beschreibung

Die vorliegende Erfindung betrifft ein Verfahren zum Erkennen eines Status eines beweglichen Objekts beim zumindest semi-autonomen Einparken eines Kraftfahrzeugs entlang einer Trajektorie unter Verwendung einer Steuereinheit und eines Sensorsystems.

Einige automatische Parksysteme sind bereits auf dem Markt verfügbar, wie zum Beispiel das Valeo Park4U^{®} System. Moderne semi-autonom fahrende Fahrzeuge sind dazu ausgelegt, sich selbst einzuparken. Um dies zu bewerkstelligen, müssen diese Fahrzeuge die Geometrie beziehungsweise Struktur ihrer Umgebung erfassen beziehungsweise analysieren. Daher verwenden Einparksysteme unterschiedliche Sensoren, um Informationen über die Umgebung zu erfassen. Häufig wird in einem sogenannten Trainingsmodus eine Trajektorie abgefahren, wobei das Fahrzeug mit seinen Sensoren markante Stellen in seiner Umgebung, die sogenannten Landmarken, erfasst. In einer Betriebsphase greift das autonom fahrende Fahrzeug auf die Daten in der Trainingsphase zurück, um seine Pose relativ zu einer in der Trainingsphase abgespeicherten Trajektorie zu bestimmen.

Viele Einparksysteme berücksichtigen nicht, dass an oder auf der Trajektorie Hindernisse sein können. Dabei kann zwischen unterschiedlichen Hindernissen unterschieden werden. Während beispielsweise ein umgestürzter Baum infolge eines Sturms ein unüberwindbares Hindernis darstellt, ist ein geschlossenes Garagentor jedoch anders zu bewerten. Das Garagentor beziehungsweise ein anderes bewegliches Hindernis kann in diesem Fall als ein überwindbares Hindernis betrachtet werden. Bei dem normalen Einparkvorgang in eine Garage wird ein Fahrer vor dem Einfahren in die Garage das Garagentor öffnen. Dies kann beispielsweise während des Heranfahrens an die Garage erfolgen. Es ist auch möglich, dass ein Fahrer sein Fahrzeug verlassen muss, um das Garagentor manuell zu öffnen. In jedem Fall wird sichergestellt, dass das Garagentor so weit geöffnet ist, dass das Kraftfahrzeug in die Garage einfahren und darin parken kann.

Die Offenlegungsschrift DE 10 2012 022 336 A1 beschreibt ein Verfahren zum Durchführen eines zumindest semi-autonomen Parkvorgangs eines Kraftfahrzeugs in eine Garage. Mittels eines Parkassistenzsystems wird die Garage detektiert und eine aktuelle Lage des Kraftfahrzeugs relativ zur Garage bestimmt. Das Parkassistenzsystem weist eine Kamera auf, womit ein Bild der Garage erfasst wird und die Garage detektiert wird. Ein aufgenommenes Bild einer Garageneinfahrt wird einer Mustererkennung unterzogen, womit die Garage identifiziert wird.

Die Offenlegungsschrift DE 10 2010 023 162 A1 beschreibt ein Verfahren zum Unterstützen eines Fahrers eines Kraftfahrzeugs beim Einparken in eine Parklücke. Dieses Verfahren weist einen Lernmodus und einen Betriebsmodus auf. In dem Lernmodus wird das Kraftfahrzeug durch den Fahrer gesteuert in die Parklücke eingeparkt, wobei mithilfe einer Sensoreinrichtung Referenzdaten über einen Umgebungsbereich der Parklücke erfasst und abgespeichert werden. In dem nachfolgenden Betriebsmodus werden die Sensordaten mit den Referenzdaten verglichen. In Abhängigkeit von diesem Vergleich wird eine aktuelle Position des Kraftfahrzeugs relativ zur Referenzzielposition bestimmt. Abhängig von der aktuellen Position des Kraftfahrzeugs relativ zur Referenzzielposition wird eine Parkbahn durch eine Fahrerassistenzeinrichtung festgelegt, entlang derer das Kraftfahrzeug in die Parklücke eingeparkt wird.

Die Patentschrift DE 10 2015 211 642 B3 betrifft eine Kommunikationsvorrichtung, die einen drahtlosen Empfänger aufweist. Dieser drahtlose Empfänger kann erste Signale von einem Fahrzeug empfangen. Die Kommunikationsvorrichtung weist ferner einen drahtlosen Sender auf, der sich dadurch auszeichnet, dass die Kommunikationsvorrichtung eingerichtet ist, basierend auf den ersten Signalen über den drahtlosen Sender zweite Signale, welche eine Information über einen Zustand des Fahrzeugs enthalten, an eine externe Informationsvorrichtung zu senden.

Die US2017/0334380 A1 zeigt ein Verfahren gemäß Oberbegriff des Patentanspruchs 1.

Die Aufgabe der vorliegenden Erfindung besteht darin, ein verbessertes Verfahren für ein zumindest semi-autonomes Einparken bereitzustellen. Dabei soll insbesondere die Existenz eines beweglichen Objekts sowie dessen Status berücksichtigt werden.

Diese Aufgabe wird durch den Patentanspruch 1 gelöst. Sinnvolle Weiterbildungen dieser Erfindung ergeben sich aus den Unteransprüchen.

Die vorliegende Erfindung beschreibt ein Verfahren zum Erkennen eines Status eines beweglichen Objekts beim zumindest semi-autonomen Einparken eines Kraftfahrzeugs entlang einer Trajektorie unter Verwendung einer Steuereinheit und eines Sensorsystems.

Dabei ist mit dem Begriff "entlang einer Trajektorie" nicht nur ein exaktes Fahren auf dieser Linie in genau einer Richtung zu verstehen. Der Begriff "entlang einer Trajektorie" umfasst insbesondere eine Bewegung des Kraftfahrzeugs, welche sich an der Trajektorie orientiert. Beim Bewegen, Fahren oder Manövrieren des Kraftfahrzeugs ist die Trajektorie insbesondere eine Orientierungshilfe. Das konkrete Bewegen des Kraftfahrzeugs muss nicht exakt dieser Trajektorie entsprechen, sondern es versucht, die Trajektorie nachzubilden.

Daher kann die Bewegung des Kraftfahrzeugs von der Trajektorie abweichen. Die Bewegung des Kraftfahrzeugs kann somit nicht nur entlang einer Aufzeichnungsrichtung, sondern auch entgegen der Aufzeichnungsrichtung erfolgen. Zum Beispiel kann das Kraftfahrzeug vor und zurück bewegt werden. Dies kann beispielsweise dann erforderlich sein, wenn unerwartet ein Hindernis auf der Trajektorie auftaucht. Somit kann das Hindernis umfahren werden, aber dennoch orientiert sich die Bewegung des Kraftfahrzeugs entlang der Trajektorie. Vorzugsweise wird in diesem Fall die weitere Bewegung des Kraftfahrzeugs sich der Trajektorie annähern.

Das Kraftfahrzeug kann insbesondere vorgegeben sein. Das Sensorsystem kann zum Beispiel wenigstens eine Kamera und wenigstens einen Ultraschallsensor aufweisen. Dazu werden folgende Verfahrensschritte durchgeführt:
Zunächst wird in einer Trainingsphase ein Objekt in einem Schritt a) an oder auf der Trajektorie in einem ersten Zustand mittels des Sensorsystems erfasst. Dies geschieht vorzugsweise anhand mehrerer bereitgestellter oder aufgenommener Bilder. Das Kraftfahrzeug kann häufig ein handelsübliches Auto sein, es kann sich jedoch auch um einen Lastwagen, Bus oder ein Kettenfahrzeug handeln. Das Objekt kann zum Beispiel auch mittels einer Strukturerkennung erfasst werden. Hinsichtlich der Strukturerkennung können verschiedene Methoden zum Einsatz kommen. So kann die Strukturerkennung mittels einer dreidimensionalen Rekonstruktion (Englisch: structure from motion) oder anderen Bildanalyseverfahren erfolgen. Bei dem Objekt kann es sich um ein unüberwindbares Hindernis oder um ein bewegbares Objekt handeln, welches bewegt werden kann. Eine Mauer beispielsweise wäre ein unüberwindbares Hindernis. Dagegen kann eine Mülltonne als ein bewegliches Objekt betrachtet werden.

Durch das Bereitstellen mehrerer Bilder ist es möglich, eine Strukturerkennung durchzuführen. Dabei können insbesondere charakterisierende Bildmerkmale aus den bereitgestellten Bildern gewonnen werden. Zusätzlich können zu den charakterisierenden Bildmerkmalen dreidimensionale Koordinaten bestimmt werden. Die dreidimensionalen Koordinaten können mit den charakterisierenden Bildmerkmalen zu sogenannten Landmarken kombiniert werden.

Dabei bedeutet "an oder auf der Trajektorie" insbesondere einen vorgegebener Abstand zur Trajektorie. Die Trajektorie kann zwar als Linie betrachtet werden, jedoch sollen auch jene Objekte erfasst werden, die einen vorgegebenen Abstand zur Trajektorie aufweisen. So kann zum Beispiel eine zur Trajektorie versetzte Mülltonne, deren Schwerpunkt zwar nicht auf der Trajektorie liegt, dennoch für das Erfassen und/oder Erkennen berücksichtigt werden. Denn die Mülltonne kann eine räumliche Ausdehnung haben, welche innerhalb des vorgegebenen Abstands zur Trajektorie hineinragt. Dabei kann zum Beispiel für den vorgegebenen Abstand ein Bereich von bis zu zwei Metern um die Trajektorie herum mit dem Begriff "an oder auf der Trajektorie" gemeint sein. Das heißt die Terminologie "an oder auf der Trajektorie" kann auch einen Art Streifen entlang einer Fahrbahn darstellen, wobei die Trajektorie die Mittellinie dazu bilden kann.

Im weiteren Verlauf des Verfahrens wird das Objekt in einem Schritt b) in einem zweiten Zustand an oder auf der Trajektorie mittels des Sensorsystems erfasst. Vorzugsweise wird das Objekt derart bewegt, sodass es nicht mehr an oder auf der Trajektorie befindlich ist. Anders gesagt wird das Objekt, welches für das Kraftfahrzeug zuvor ein Hindernis war, von der Trajektorie entfernt. Dies geschieht vorzugsweise durch ein Bewegen des Objekts. Dieses Bewegen kann manuell oder automatisch erfolgen. Man kann auch sagen, dass das Objekt für das Kraftfahrzeug entfernt wird. Mit dem Begriff "Entfernen des Objekts" ist nicht zwingend gemeint, dass das erfasste Objekt vollständig aus einem Erfassungsbereich des Sensorsystems herausbewegt wird. Es reicht aus, wenn das Objekt sich nach dem Entfernen oder Bewegen nicht länger an oder auf der Trajektorie für das Kraftfahrzeug befindet.

Vorzugsweise ist in der Trainingsphase bekannt, dass sich ein Objekt als ein Hindernis an oder auf der Trajektorie befindet. Ein solches Hindernis kann beispielsweise ein Garagentor, ein Zaun, eine Schleuse, ein Gatter oder eine Rampe sein. All diesen Hindernissen ist der Umstand gemein, dass sie derart verändert werden können, dass sie für das Kraftfahrzeug nicht länger ein Hindernis darstellen. Das Erfassen des Objekts im zweiten Zustand kann auch als eine Suche nach dem entfernten Objekt verstanden werden. In einem Schritt c) werden die Ergebnisse aus dem Schritt a) und dem Schritt b) verglichen sowie das Objekt als das bewegliche Objekt identifiziert, welches in Schritt a) im ersten Zustand und in Schritt b) im zweiten Zustand erfasst wurde. Vorzugsweise wird in Schritt c) festgestellt, dass das Objekt aufgrund sich nicht länger an oder auf der Trajektorie befindet. Dies kann durch ein entsprechendes Bewegen des Objekts induziert worden sein. Die Ergebnisse der Schritte a) und b) sowie das Ergebnis des Vergleichens in Schritt c) werden vorzugsweise abgespeichert.

Die Ergebnisse aus Schritt a) und Schritt b) werden verglichen. Zugleich wird das Objekt identifiziert, welches in Schritt a) im ersten Zustand erfasst wurde, aber in Schritt b) im zweiten Zustand erfasst wurde. Insbesondere dadurch wird das Objekt, welches in Schritt a) im ersten Zustand erfasst wurde und in Schritt b) im zweiten Zustand erfasst wurde als das bewegliche Objekt identifiziert. Das Vergleichen der Ergebnisse aus Schritt a) und Schritt b) kann insbesondere als eine Differenzbildung verstanden werden. Durch dieses Vergleichen wird zumindest ein Unterschied hinsichtlich mehrerer erfasster Objekte festgestellt. Befand sich beispielsweise in Schritt a) auf der Trajektorie ein geschlossenes Garagentor, so wurde dieses geschlossene Garagentor in Schritt a) als Objekt im ersten Zustand erfasst. In Schritt b) wurde zum Beispiel das Garagentor geöffnet. Somit stellt das geöffnete Garagentor stellt in diesem Fall das Objekt im zweiten Zustand dar. Das geöffnete Garagentor ist nicht länger ein Hindernis für das Kraftfahrzeug. Eventuell kann das geöffnete Garagentor in Schritt b) nicht erfasst werden. Dieses "Nicht-Erfassen" stellt in diesem Fall den zweiten Zustand des Garagentors dar. Das nun "verschwundene" Garagentor wird in Schritt c) als das bewegliche Objekt identifiziert.

Im weiteren Verlauf wird in einer Betriebsphase der Status des beweglichen Objekts festgestellt, wobei das Sensorsystem eine Umgebung des Kraftfahrzeugs erfasst, sowie ein Zustandssignal betreffend den Status des beweglichen Objekts erzeugt.

Die Erfindung sieht ein Sensorsystem vor, das mindestens eine Kamera und mindestens einen weiteren Sensor aufweist und die mindestens eine Kamera und der mindestens eine weitere Sensor fortlaufend mit der mindestens einen Kamera zusammen die Umgebung des Kraftfahrzeugs erfasst. Der mindestens eine weitere Sensor kann insbesondere ein Ultraschallsensor sein. Vorzugsweise erfassen die Kamera und der Ultraschallsensor fortlaufend zusammen die Umgebung des Kraftfahrzeugs erfassen. Des Weiteren wird ein Zustandssignal betreffend den Status des beweglichen Objekts erzeugt. Werden zum Beispiel die Kamera und der Ultraschallsensor fortlaufend zusammen für die Erfassung der Umgebung des Kraftfahrzeugs eingesetzt, können sich diese beiden unterschiedlichen Sensortypen ergänzen. Der Ultraschallsensor kann insbesondere eine nähere Umgebung des Kraftfahrzeugs erfassen beziehungsweise überwachen. Damit ist insbesondere ein Bereich von weniger als fünf Metern um das Kraftfahrzeug herum gemeint. Eine Kamera kann hingegen einen größeren Bereich um das Kraftfahrzeug herum erfassen und analysieren.

Eine weitere Variante sieht vor, dass der mindestens eine weitere Sensor als mindestens ein Ultraschallsensor ausgebildet ist und der mindestens eine Ultraschallsensor fortlaufend mit der mindestens einen Kamera zusammen die Umgebung des Kraftfahrzeugs erfasst. Die im vorigen Absatz genannten Ausführungen gelten sinngemäß für diese Variante. Hier ist der mindestens eine weitere Sensor als mindestens ein Ultraschallsensor ausgebildet.

Jedoch kann im Falle eines Stillstands des Kraftfahrzeugs eine Überwachung der Umgebung des Kraftfahrzeugs mithilfe der Kamera eingeschränkt beziehungsweise sogar unmöglich sein. So kann beispielsweise bei einem Stillstand des Kraftfahrzeugs eine dreidimensionale Strukturerkennung aufgrund der fehlenden Eigenbewegung des Kraftfahrzeugs nicht mehr möglich oder zumindest sehr schwierig sein. In diesem Fall bietet der Ultraschallsensor zusätzlich die Möglichkeit, die Umgebung des Kraftfahrzeugs zu erfassen. Damit ist es möglich, bei einem Stillstand einen autonomen Einparkvorgang sicher fortzusetzen. Da der Ultraschallsensor in diesem Fall einen Bereich von bis zu etwa fünf Metern zuverlässig erfassen kann, könnte das Kraftfahrzeug langsam sich wieder in Bewegung setzen. Dies würde eine Eigenbewegung des Kraftfahrzeugs hervorrufen, welche eine dreidimensionale Strukturerkennung wieder möglich machen würde. Durch das Zusammenwirken von Kamera und Ultraschallsensor kann damit sichergestellt werden, dass zu jedem Zeitpunkt des autonomen Einparkens die Umgebung des Kraftfahrzeugs erfasst und/oder analysiert werden kann. Somit kann das Sensorsystem insbesondere eine Kombination aus einer Kamera und einem Ultraschallsensor darstellen, die effektiv zusammenwirken.

In einer weiteren Variante der Erfindung wird das Erfassen in Schritt a) und Schritt b) jeweils anhand mehrerer von der mindestens einen Kamera bereitgestellter Bilder durchgeführt. Vorzugsweise weist das Kraftfahrzeug mindestens eine Kamera auf, welche Bilder von der Umgebung des Kraftfahrzeugs erstellt. Mit einer entsprechenden Bildanalyse kann das Objekt auf den Bildern jeweils im ersten beziehungsweise zweiten Zustand erfasst werden. So kann eine Bilderkennung feststellen, ob ein Garagentor geschlossen (erster Zustand) oder geöffnet (zweiter Zustand) ist. Die Bilderkennung ist vorzugsweise darauf optimiert Änderungen eines Objekts festzustellen, welches sich an oder auf der Trajektorie des Kraftfahrzeugs befindet. Idealerweise können dazu bereits vorhandene Kameras am Kraftfahrzeug verwendet werden. Mittels solcher Kameras kann eine Art kostenloser Zusatznutzen bereitgestellt werden.

Unter dem Begriff "semi-autonom" ist eine schwächere Variante von autonom zu verstehen. Semi-autonom fahrende Fahrzeuge sind vorzugsweise in der Lage Entscheidungen und Handlungen von Menschen nachzuahmen. Ein semi-autonom fahrendendes Kraftfahrzeug kann demnach das Einparken erlernen, indem es vom Menschen "geschult" wird. Dies geschieht vorzugsweise in der Trainingsphase. Ein vollständig autonom fahrendes Kraftfahrzeug würde im Idealfall keinen Lernprozess benötigen. Dies wäre vergleichbar mit einem menschlichen Fahrer, der zum ersten Mal das Kraftfahrzeug an einer unbekannten Stelle parkt. Der Übergang zwischen "semi-autonom" und autonom ist fließend. Jedoch kann ein Kraftfahrzeug mit entsprechenden Sensoren zumindest als semi-autonom eingestuft werden.

In einer weiteren Variante der Erfindung ist vorgesehen, dass für den Schritt a) und/oder für den Schritt b) eine dreidimensionale Rekonstruktion, eine semantische Aufteilung und/oder ein faltendes neuronales Netzwerk (Englisch: Convolutional neuronal network) eingesetzt werden. Die dreidimensionale Rekonstruktion wird in der Regel anhand mehrerer zweidimensionaler Bilder durchgeführt. Dabei können verschiedene Methoden zum Einsatz kommen. Ein bekanntes Verfahren zur Strukturerkennung ist die sogenannte "Structure from motion"-Methode. Bei einer semantischen Segmentierung wird versucht, ein Bild insoweit zu analysieren, dass Objekte auf einem Pixellevel erkannt werden können. So kann beispielsweise bei einem Bild festgestellt werden, welche Pixelbereiche zum Beispiel einen Baum oder ein Gebäude darstellen. Das faltende neuronale Netzwerk kann ebenfalls für ein Identifizieren und/oder Erkennen einer Objektart eingesetzt werden.

Ein faltendes neuronales Netzwerk weist in der Regel mehrere Filter auf, welche sich jeweils als eine Matrix darstellen lassen. Diese einzelnen Matrizen können in einer sogenannten Würfelmatrix angeordnet sein. Jede dieser einzelnen Matrizen kann einen eigenen Filter darstellen, der dazu ausgebildet ist, ein spezielles charakterisierendes Bildmerkmal in einem Bild zu finden und/oder zu erkennen. Dabei ist insbesondere vorgesehen, dass der Filter (Matrix) die Pixelwerte eines Bildes abtastet, um dadurch das dazugehörige charakterisierende Bildmerkmal zu finden. In vorteilhafter Weise werden mehrere Filter eingesetzt, welche auf unterschiedliche charakterisierende Bildmerkmale spezialisiert sind. Die jeweiligen Ergebnisse der Filter können später sinnvoll kombiniert werden, um eine Gesamtanalyse des Bildes besser bereitstellen zu können. Bei diesem Analyseprozess kommt insbesondere die mathematische Faltung zum Einsatz. Ebenso kann vorgesehen sein, dass unterschiedliche Methoden der Bildverarbeitung zum Einsatz kommen. Damit ist es möglich, unterschiedliche Methoden der Bildverarbeitung sinnvoll miteinander zu kombinieren, um so deren jeweiligen Vorteile optimal auszunutzen.

Eine weitere Variante der Erfindung sieht vor, dass der mindestens eine Ultraschallsensor einen Bereich bis zu einer vorgegebenen Höhe über dem Boden erfasst. Bei einem Kraftfahrzeug sind Ultraschallsensoren häufig im Bereich der Stoßstange beziehungsweise eines Stoßfängers angeordnet. Vorzugsweise können bereits vorhandene Parksensoren als Ultraschallsensoren eingesetzt werden. Vorzugsweise tasten diese Sensoren nur einen Bereich bis zu einer vorgegebenen Höhe über dem Boden ab. So kann es beispielsweise ausreichend sein, wenn der Ultraschallsensor lediglich eine Höhe von 1,5 Metern über dem Boden abtastet beziehungsweise erfasst. Ebenso können zum Beispiel Objekte, welche nicht den Boden berühren, jedoch dennoch für das Kraftfahrzeug ein Hindernis darstellen, detektiert werden. Solche Hindernisse können von dem Kraftfahrzeug nicht unterfahren werden. Verfügt der Ultraschallsensor über ein ausreichend großes Sichtfeld (FOV), so kann bereits nur der Ultraschallsensor ein solches Hindernis erkennen. Dies ist zum Beispiel der Fall, wenn eine Schranke 1 m über dem Boden angeordnet ist und der Ultraschallsensor Objekte bis zu 1,5 m über dem Boden detektieren kann.

Reicht das Sichtfeld des Ultraschallsensors nicht mehr zum Detektieren eines Hindernisses aus, so kann mithilfe der Kamera das Hindernis erkannt werden. Dies wäre beispielsweise bei von einer Decke herabhängenden Schildern der Fall. Hier könnte der Abstand zum Boden so groß sein, dass der Ultraschallsensor ohne die Kamera die herabhängenden Schilder als Hindernis nicht erkennen würde. Jedoch kann das Sensorsystem mithilfe der Kamera die herabhängenden Schilder erkennen. Somit gelingt es, durch ein Zusammenwirken des Ultraschallsensors und der Kamera derartige Hindernisse sicher und zuverlässig zu erkennen. Somit können nicht unterfahrbare Objekte, welche der Ultraschallsensor übersehen würde, trotzdem sicher und zuverlässig erkannt werden. Damit können Objekte, welche mit dem Kraftfahrzeug kollidieren könnten, sicher erkannt werden. Somit ist es möglich, das Kamerasystem mit einer Art effektivem Kollisionsschutz zu kombinieren. Auch wenn die Kamera ein Objekt oder Hindernis übersehen würde, könnte in diesem Fall immer noch der Ultraschallsensor die drohende Kollision rechtzeitig erkennen.

Eine weitere Variante der vorliegenden Erfindung sieht vor, dass die Steuereinheit in Schritt c) ein Bewegungssignal zum Entfernen des erfassten Objekts an oder auf der Trajektorie erzeugt. Soll das Kraftfahrzeug eingeparkt werden, so ist dies nur möglich, wenn auf der Trajektorie kein Objekt als ein Hindernis für das Kraftfahrzeug vorhanden ist. Anstelle eines manuellen Entfernens, beispielsweise durch einen menschlichen Fahrer, der aus dem Kraftfahrzeug aussteigt und ein Garagentor öffnet, sieht diese Variante vor, dass die Steuereinheit ein Bewegungssignal erzeugt. Dieses Bewegungssignal sieht vor, dass im weiteren Verlauf das bewegliche Objekt so bewegt wird, dass es nicht länger an oder auf der Trajektorie des Kraftfahrzeugs ist. Das Erzeugen des Bewegungssignals kann zum Beispiel nach einem vorgegebenen Muster oder nach einer bestimmten Regel erfolgen.

Eine weitere Variante der Erfindung sieht vor, dass ein Steuersignal zum autonomen Befahren der Trajektorie durch das Kraftfahrzeug in Abhängigkeit von dem Zustandssignal und/oder eines Abstands des Kraftfahrzeugs zum beweglichen Objekt erzeugt wird. Das Zustandssignal kann insbesondere beschreiben, ob das bewegliche Objekt noch als Hindernis vorhanden ist oder nicht. Ein geschlossenes Garagentor zum Beispiel würde ein Hindernis darstellen, ein geöffnetes Garagentor stellt ein bewegliches Objekt dar, welches in diesem Zustand nicht länger ein Hindernis für das vorgegebene Kraftfahrzeug ist. Soll das Kraftfahrzeug autonom einparken und beschreibt das Zustandssignal, dass das bewegliche Objekt als Hindernis an oder auf der Trajektorie vorhanden ist, so ist vorzugsweise vorgesehen, dass ein Steuersignal erzeugt wird, welches diesem Umstand Rechnung trägt. Zum Beispiel könnte das Steuersignal das autonom manövrierende Kraftfahrzeug zum Stillstand bringen. Dies kann insbesondere dann vorgesehen sein, wenn ein vorgegebener Abstand des Kraftfahrzeugs zum beweglichen Objekt unterschritten wurde. Dies gilt vor allem, wenn das bewegliche Objekt als Hindernis an oder auf der Trajektorie erkannt wurde. Je nachdem, wie das Zustandssignal und/oder der Abstand des Kraftfahrzeugs zum beweglichen Objekt ausgebildet ist, kann ein jeweils anderes Steuersignal sinnvoll sein und entsprechend erzeugt werden.

In einer speziellen Variante der Erfindung ist vorgesehen, dass nach dem Erzeugen des Bewegungssignals das Kraftfahrzeug sich eine vorgegebene Zeitspanne nicht bewegt. Das Bewegungssignal dient insbesondere dazu, um das für das vorgegebene Kraftfahrzeug erkannte Objekt oder Hindernis zu entfernen. Das Entfernen des Objekts nimmt in der Regel einige Zeit in Anspruch. Um eine Kollision des Kraftfahrzeugs mit dem beweglichen Objekt sicher ausschließen zu können, ist es sinnvoll, dass das Kraftfahrzeug eine vorgegebene Zeitspanne wartet beziehungsweise sich nicht bewegt. Es verharrt somit einige Zeit unbeweglich an einer Stelle. Wurde zum Beispiel ein Bewegungssignal zum Öffnen eines Garagentores erzeugt, so würde in diesem Fall das Kraftfahrzeug eine bestimmte Zeit, zum Beispiel 30 Sekunden, unbeweglich an einer Stelle verweilen. Nach dieser vorgegebenen Zeitspanne wäre idealerweise das Garagentor geöffnet und das Kraftfahrzeug könnte den Vorgang des autonomen Einparkens sicher fortsetzen.

Die Erfindung sieht vor, dass das Kraftfahrzeug in der Trainingsphase an einem ersten Zwischenpunkt zum Stehen gebracht wird, wobei an dem ersten Zwischenpunkt der mindestens eine weitere Sensor kein Hindernis erfasst, die mindestens eine Kamera das Hindernis jedoch bereits erfasst hat. Diese Variante zielt vor allem darauf ab, das Erfassen und Identifizieren des Hindernisses mithilfe der Kamera zu erreichen. Der mindestens eine weitere Sensor kann zum Beispiel als Ultraschallsensor ausgebildet sein und gilt hinsichtlich der Erkennung von Hindernissen als sehr zuverlässig. Zwar vermag der Ultraschallsensor nicht, eine Objektart festzustellen, aber die Signale des Ultraschallsensors vermögen sicher zu erkennen, ob ein Hindernis vorhanden ist oder nicht. Um zu erreichen, dass die Kamera das Hindernis erfasst und nicht der Ultraschallsensor, wird in dieser Variante der Erfindung das Kraftfahrzeug an einem ersten Zwischenpunkt zum Stehen gebracht. An diesem ersten Zwischenpunkt vermag der Ultraschallsensor noch nicht das Hindernis zu erfassen. Das bedeutet insbesondere, dass das Kraftfahrzeug in einer Entfernung vor dem Hindernis zum Stehen gebracht wird, welches außerhalb des Erfassungsbereichs des Ultraschallsensors oder des mindestens einen weiteren Sensors liegt. Das Kraftfahrzeug kann zum Beispiel mindestens 5 Meter vor dem Hindernis anhalten. An dieser Stelle würde der Ultraschallsensor das Hindernis noch nicht erkennen. Wenn das Sensorsystem das Hindernis erkannt hat, ist sichergestellt, dass es von der Kamera erkannt wurde. Damit ist es möglich, die Kamera besser im Hinblick auf das Erfassen und Identifizieren des Hindernisses zu trainieren. Störende Zwischensignale des Ultraschallsensors können somit weitgehend unterbunden werden. Da in der Trainingsphase das Kraftfahrzeug vorzugsweise manuell gesteuert wird, kann auf den Einsatz des Ultraschallsensors in der Trainingsphase üblicherweise verzichtet werden. Dies kann das Trainieren für die Kamera hinsichtlich der Erkennung des Hindernisses verbessern.

Eine weitere Variante der Erfindung sieht vor, dass im Falle des im ersten Zustand erfassten Objekts an oder auf der Trajektorie in der Betriebsphase die Steuereinheit einen zweiten Zwischenpunkt an oder auf der Trajektorie bestimmt, an dem das Kraftfahrzeug angehalten wird. Der zweite Zwischenpunkt ist insbesondere derart bestimmt, dass an dieser Stelle der Ultraschallsensor oder der mindestens eine weitere Sensor das bewegliche Objekt erfasst, sofern es als Hindernis für das vorgegebene Kraftfahrzeug vorhanden ist. Im Falle eines geschlossenen Garagentores würde beispielsweise das Kraftfahrzeug demnach circa zwei bis drei Meter vor dem Garagentor zum Stehen kommen. Das Kraftfahrzeug würde in dieser Variante der Erfindung maximal 5 Meter entfernt vom Hindernis anhalten. Da in der Betriebsphase das Kraftfahrzeug vorzugsweise autonom fährt, ist es sinnvoll, den Vorgang des autonomen Einparkens so sicher wie möglich zu gestalten. Da an dem zweiten Zwischenpunkt der Ultraschallsensor das Hindernis an oder auf der Trajektorie erfassen würde, wenn das bewegliche Objekt als Hindernis ausgebildet ist, würde das Hindernis auch dann detektiert werden, wenn dies der Kamera nicht gelänge. Würde beispielsweise die Kamera das Hindernis an oder auf der Trajektorie nicht erfassen, so bestünde die Gefahr, dass der Ultraschallsensor das Hindernis erst im letzten Moment erkennen würde. Manche Ultraschallsensoren weisen eine gewisse Trägheit auf und können Objekte nicht unmittelbar sofort in Echtzeit erfassen. Unter Umständen könnte es sogar zu spät sein, das Kraftfahrzeug rechtzeitig zum Stehen zu bringen. Um die Gefahr einer Kollision zusätzlich zu reduzieren, wird das Kraftfahrzeug an dem zweiten Zwischenpunkt angehalten. Hätte die Kamera das Hindernis nicht erkannt, so könnte nun der Ultraschallsensor das Hindernis erfassen, was bei der Erzeugung des Steuersignals hinsichtlich des autonomen Manövrierens berücksichtigt werden könnte. Da das Kraftfahrzeug an dem zweiten Zwischenpunkt zum Stehen gebracht wurde, entfiele auch die Notwendigkeit eines abrupten Bremsmanövers. Der zweite Zwischenpunkt kann somit als zusätzlicher Sicherheitscheck betrachtet werden. An dem zweiten Zwischenpunkt wird vorzugsweise durch den Ultraschallsensor geprüft, ob das Hindernis in oder an der Trajektorie vorhanden ist. Eine eventuelle Fehleinschätzung der Kamera könnte somit rechtzeitig erkannt und/oder korrigiert werden.

Eine weitere Variante der vorliegenden Erfindung sieht vor, dass am zweiten Zwischenpunkt der mindestens eine weitere Sensor das Objekt im ersten Zustand registriert. In diesem Fall würde das Objekt sowohl von der mindestens einen Kamera als auch durch den mindestens einen weiteren Sensor im ersten Zustand erfasst werden. Somit kann die Zuverlässigkeit des Sensorsystems hinsichtlich der Erkennung des Objekts im ersten Zustand erhöht werden. Beschriebene Vorteile anderer Varianten der Erfindung gelten sinngemäß auch für diese Variante.

Eine weitere Variante der Erfindung sieht vor, dass das Kraftfahrzeug in der Betriebsphase nach dem Erfassen des Objekts im ersten Zustand das Bewegungssignal zum Bewegen des erfassten Objekts aussendet und die Geschwindigkeit des Kraftfahrzeugs beim autonomen Befahren der Trajektorie reduziert wird. Durch das ausgesandte Bewegungssignal sowie die reduzierte Geschwindigkeit des Kraftfahrzeugs beim autonomen Befahren der Trajektorie kann das bewegliche Objekt bis zum Eintreffen des Kraftfahrzeugs an der Stelle des erfassten Hindernisses entfernt worden sein. Diese Variante bietet sich insbesondere dann an, wenn ein kontinuierlicher autonomer Einparkvorgang ohne Zwischenhalt gewünscht ist. Die Reduktion der Geschwindigkeit des Kraftfahrzeugs beim autonomen Befahren der Trajektorie orientiert sich vorzugsweise an der Zeitspanne, welche nötig ist, um das Hindernis zu entfernen. Das heißt die Reduktion der Geschwindigkeit kann von der Zeitspanne abhängig sein, die erforderlich ist, das Objekt im ersten Zustand als Hindernis zu entfernen. Dies kann insbesondere eine Zeitspanne sein, die ein Garagentor benötigt, um vollständig zu öffnen. Da in diesem Fall das Kraftfahrzeug nicht stehenbleiben muss, kann insbesondere während der gesamten Dauer des autonomen Einparkvorgangs mittels der Kamera eine Strukturerkennung bereitgestellt werden. Dies liegt daran, dass die Strukturerkennung, beispielsweise die "structure from motion" Methode, im Falle eines stehenden Kraftfahrzeugs eingeschränkt ist. Durch Vermeiden eines Zwischenstopps entlang der Trajektorie kann vermieden werden, dass die Strukturerkennung mittels der Kamera aussetzt beziehungsweise beeinträchtigt wird.

Eine weitere Variante der vorliegenden Erfindung sieht vor, dass mehrere Punkte eines in der Trainingsphase zurückgelegten Weges des Kraftfahrzeugs in einer digitalen Karte gespeichert werden. Die gesammelten Daten und Erkenntnisse während der Trainingsphase werden vorzugsweise in einer digitalen Karte gespeichert, auf welche die Steuereinheit Zugriff hat. Damit können die in der Trainingsphase gesammelten und bereitgestellten Informationen in einer späteren Betriebsphase wieder zur Verfügung gestellt werden.

Eine weitere Variante der Erfindung sieht vor, dass mehrere Kameras zur Erzeugung einer Rundumsicht und/oder Parksensoren für das Sensorsystem eingesetzt werden. Vorzugsweise weist das Kraftfahrzeug mehrere Kameras an verschiedenen Stellen des Kraftfahrzeugs auf. So könnte im vorderen Bereich der Scheinwerfer eine Kamera angeordnet sein, eine weitere Kamera könnte in einem Bereich der Rücklichter des Kraftfahrzeugs angeordnet sein, weitere zwei Kameras könnten beispielsweise jeweils an Außenspiegeln des Kraftfahrzeugs angeordnet sein. Durch den Einsatz mehrerer Kameras kann das Erfassen beziehungsweise Suchen nach dem Objekt an oder auf der Trajektorie (Hindernis) verbessert beziehungsweise beschleunigt werden. Werden Parksensoren als Ultraschallsensoren eingesetzt, so ist es nicht nötig, weitere zusätzliche Ultraschallsensoren am Kraftfahrzeug zu verbauen.

Eine spezielle Variante der vorliegenden Erfindung sieht vor, dass alternativ oder zusätzlich zu den Schritten b) und c) das bewegliche Objekt dadurch festgestellt wird, dass das Kraftfahrzeug einen Punkt an oder auf der Trajektorie erreicht, der ursprünglich durch das Objekt im ersten Zustand als Hindernis belegt war. Diese Variante der Erfindung ermöglicht es, das Hindernis auf eine andere Weise als das bewegliche Objekt zu identifizieren. Wird in der Trainingsphase das Hindernis (hier das Objekt im ersten Zustand) erkannt und das Kraftfahrzeug dennoch an einen Punkt gesteuert, der eigentlich durch das Hindernis belegt ist, so ist dies ein Hinweis, dass das erfasste Hindernis nicht länger vorhanden ist. Diese Methode eignet sich insbesondere dann, wenn in der Trainingsphase das Kraftfahrzeug manuell gesteuert wird. Die Steuereinheit würde insbesondere in diesem Fall in der Trainingsphase einen Widerspruch feststellen. Der Widerspruch besteht darin, dass das Kraftfahrzeug einen Punkt erreicht hat, der eigentlich durch das Hindernis belegt sein sollte. Dieser Widerspruch würde in diesem Fall anzeigen, dass es sich bei dem zuvor erfassten Hindernis um ein bewegliches Hindernis handeln muss. Wenn das Hindernis zum Beispiel ein geschlossenes Garagentor ist, kann der Fahrer des Kraftfahrzeugs das Garagentor während der Trainingsphase öffnen. Fährt er nun das Kraftfahrzeug weiter, würde die Steuereinheit irgendwann registrieren, dass sich das Kraftfahrzeug an den Koordinaten des Hindernisses befände. Da das Kraftfahrzeug nicht einfach so durch das geschlossene Garagentor fahren kann - ein zerstörerisches Durchbrechen durch das Garagentor soll hier nicht in Erwägung gezogen werden - kann die Steuereinheit daraus folgern, dass das Hindernis nicht länger vorhanden ist. Da in diesem Beispiel das Kraftfahrzeug sich an einem "unmöglichen Punkt" befände, könnte eine entsprechend vorgegebene Logik beinhalten, dass das ursprüngliche Hindernis ein bewegliches Objekt ist, was bereits entfernt wurde. Diese Variante kommt vorzugsweise bei einem manuellen Manövrieren des Kraftfahrzeugs zum Einsatz. Mittels dieser Variante kann der Fahrer der Steuereinheit des Kraftfahrzeugs die Position des Hindernisses, hier das Garagentor, einprägen. Damit könnten die Schritte c) und d) alternativ ausgeführt werden.

Die vorliegende Erfindung stellt ferner ein System mit einem Kraftfahrzeug, einem Sensorsystem und einem beweglichen Objekt bereit, das ausgebildet ist, ein Verfahren nach einem der vorigen Varianten auszuführen. Die bei den vorigen Varianten der vorliegenden Erfindung beschriebenen Vorteile gelten sinngemäß auch für dieses System.

In einer weiteren Variante des Systems ist das bewegliche Objekt als Garagentor, beweglicher Sperrpfosten, Zaun, Schranke und/oder verschiebbare Wand ausgebildet. Diese Erfindung beabsichtigt insbesondere einen Einparkvorgang zu erleichtern, der oft jedoch durch ein Hindernis nicht direkt durchgeführt werden kann. Ein Parkplatz für das Kraftfahrzeug kann zum Beispiel durch einen Sperrposten oder eine Schranke zunächst unzugänglich sein. Mit Hilfe dieser Erfindung kann eine Steuereinheit des Kraftfahrzeugs das Hindernis erkennen, welches unterschiedlich ausgebildet sein kann. Idealerweise kann die Steuereinheit ein Bewegen des Hindernisses veranlassen, sodass zum Beispiel ein Zaun oder eine verschiebbare Wand den Parkplatz freigibt. Anschließend kann die Steuereinheit feststellen, dass kein Hindernis mehr an oder auf der Trajektorie vorhanden ist und ein autonomes Manövrieren zu dem Parkplatz fortsetzen. Damit kann ein Fahrer direkt an seinem Wunschort, zum Beispiel vor der Haustüre, aussteigen und das Einparken des Kraftfahrzeugs der Steuereinheit des Kraftfahrzeugs überlassen.

Eine weitere Variante des Systems sieht vor, dass das Sensorsystem mindestens einen Ultraschallsensor, einen Lidar-Sensor, einen Laserscanner, eine Kamera und/oder einen Radarsensor aufweist. Je nach Anwendungssituation können unterschiedliche Sensoren beim Sensorsystem zum Einsatz kommen. Beim autonomen Manövrieren zum Einparken des Kraftfahrzeugs kommen bevorzugt mindestens eine Kamera und mindestens ein Ultraschallsensor zum Einsatz. Radarsensoren haben in der Regel eine höhere Reichweite als Ultraschallsensoren und können insbesondere bei einer längeren Trajektorie von mehreren hundert Metern als Ergänzung eingesetzt werden.

Zudem stellt die Erfindung ein Computerprogrammprodukt mit Programmcodemitteln bereit, welche in einem computerlesbaren Medium gespeichert sind, um das Verfahren nach einem der vorigen Varianten durchzuführen, wenn die Programmcodemittel auf einem Prozessor einer elektronischen Steuerungseinheit ausgeführt werden. Dies bedeutet insbesondere, dass bestimmte Verfahrensschritte digital als Datensatz abgespeichert werden können. Im weiteren Verlauf kann die elektronische Steuerungseinheit den digitalen Datensatz abrufen, um die jeweiligen Verfahrensschritte auszuführen.

Ferner wird ein Fahrerassistenzsystem bereitgestellt, das ausgebildet ist, ein Verfahren nach den vorigen Varianten auszuführen, wobei ein Steuersignal zum autonomen Manövrieren des Kraftfahrzeugs in Abhängigkeit von dem Zustandssignal und/oder eines Abstandes des Kraftfahrzeugs zum beweglichen Objekt erzeugt wird. In dieser Variante der Erfindung ist das Computerprogrammprodukt insbesondere innerhalb eines Fahrerassistenzsystems integriert. Das Fahrerassistenzsystem kann hierbei ein Steuersignal zum autonomen Einparken des Kraftfahrzeugs erzeugen. Dies geschieht in Abhängigkeit von dem Zustandssignal und/oder des Abstandes des Kraftfahrzeugs zu dem beweglichen Objekt.

Darüber hinaus stellt die vorliegende Erfindung ein Kraftfahrzeug mit einem Fahrerassistenzsystem bereit. Vorzugsweise sind das Fahrerassistenzsystem und/oder das Computerprogrammprodukt mit einem Kraftfahrzeug verbunden. Die Eingliederung des erfindungsgemäßen Verfahrens in ein Kraftfahrzeug stellt eine bevorzugte Variante dieser Erfindung dar.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Dabei zeigen:
- Fig. 1: eine beispielhafte Trajektorie zu einem Parkplatz mit einem Kraftfahrzeug;
- Fig. 2: ein Kraftfahrzeug mit dem Sensorsystem auf einer Trajektorie in Richtung des Parkplatzes, der aufgrund der Stellung des beweglichen Objekts nicht erreicht werden kann;
- Fig. 3: ein Kraftfahrzeug mit Sensorsystem auf einer Trajektorie in Richtung des Parkplatzes, wobei das bewegliche Objekt den Parkplatz teilweise freigegeben hat; und
- Fig. 4: Kraftfahrzeug mit Sensorsystem vor dem Parkplatz, wobei das bewegliche Objekt den Parkplatz nur teilweise freigegeben hat.

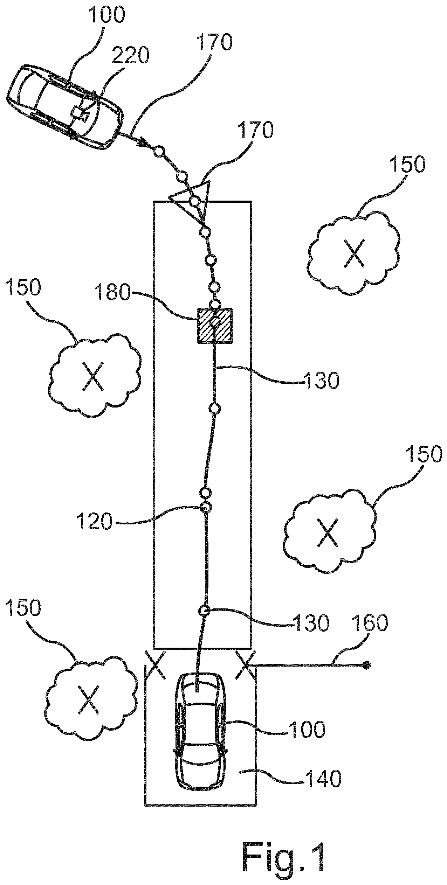

Fig. 1 zeigt ein Kraftfahrzeug 100 mit einer Pose 110, welches sich entlang einer Trajektorie 130 bis zu einem Parkplatz 140 bewegen soll. Die Trajektorie 130 kann insbesondere einen ersten Zwischenpunkt 170 sowie einen weiteren zweiten Zwischenpunkt 180 aufweisen. Der erste Zwischenpunkt 170 kann insbesondere als Startpunkt angesehen werden.

Entlang der Trajektorie 130 können weitere Zwischenpunkte 120 vorgesehen sein. Hier könnte beispielsweise vorgesehen sein, dass eine Kamera 220 mehrere Bilder von der Umgebung des Kraftfahrzeugs 100 macht. Dabei können insbesondere markante Stellen erfasst werden, welche dabei helfen können, die Umgebung des Kraftfahrzeugs 100 zu beschreiben. Diese markanten Stellen sind in Fig. 1 als Landmarken 150 gekennzeichnet. In Fig. 1 sind die Landmarken 150 als Bäume angedeutet. Jedoch können auch andere Objekte als Landmarken 150 dienen. Die Fig. 1 zeigt auch ein bewegliches Objekt 160, welches in diesem Beispiel bereits vollständig als Hindernis für das Kraftfahrzeug 100 auf der Trajektorie 130 entfernt wurde. In diesem Fall wäre es möglich, dass das Kraftfahrzeug 100 in den Parkplatz 140 einfährt und darin parkt.

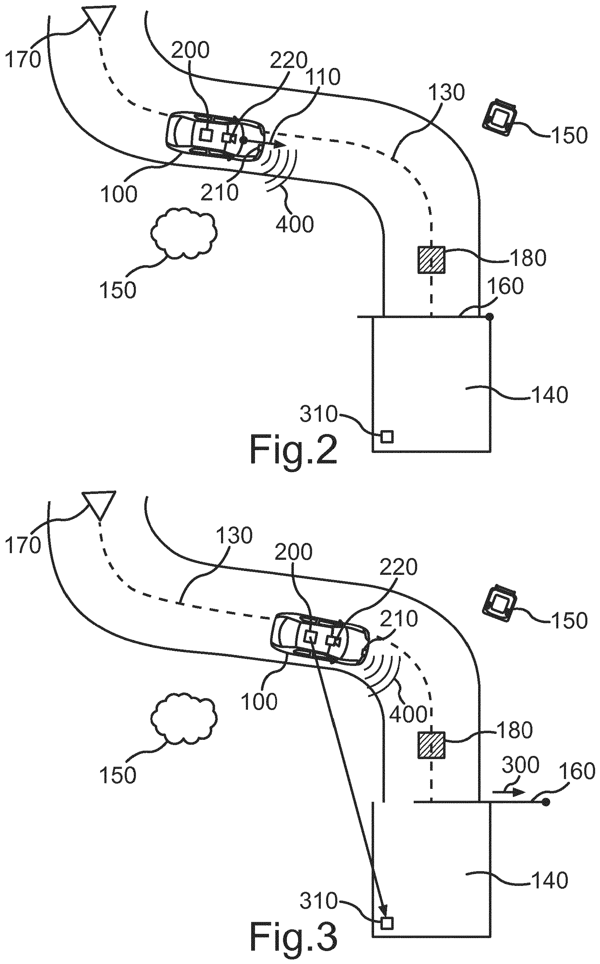

In Fig. 2 ist an dem Kraftfahrzeug 100 zusätzlich eine Kamera 220 sowie ein Ultraschallsensor 210 angeordnet. In Fig. 2 sind zwei unterschiedliche Landmarken 150 dargestellt. Eine Landmarke ist als Baum, die andere Landmarke als eine Mülltonne angedeutet. Landmarken 150 weisen charakterisierende Bildmerkmale auf, die in der Regel mit dreidimensionalen Koordinaten verknüpft sind. Im Beispiel von Fig. 2 befindet sich das Kraftfahrzeug 100 vor dem zweiten Zwischenpunkt 180. Entlang der Trajektorie 130 befindet sich ebenfalls das bewegliche Objekt 160. Im Beispiel von Fig. 2 ist das bewegliche Objekt 160 als ein Hindernis für das Kraftfahrzeug ausgebildet. Das bewegliche Objekt 160 kann beispielsweise ein Zaun, ein Garagentor oder eine Rampe sein. Trotz dieses Umstands ist es möglich, dass das Kraftfahrzeug 100 sich im Beispiel der Fig. 2 bereits autonom bewegt. Da das Kraftfahrzeug 100 im Beispiel der Fig. 2 noch nicht unmittelbar vor dem beweglichen Objekt 160 positioniert ist, ist ein Abbruch des autonomen Manövrierens noch nicht zwingend nötig. Ein Anhalten des Kraftfahrzeugs 100 könnte beispielsweise am zweiten Zwischenpunkt 180 vorgesehen sein. Im Normalfall wird bereits die Kamera 220 im Beispiel der Fig. 2 das bewegliche Objekt 160 erkannt haben. In der Regel wird die Kamera 220 auch festgestellt haben, dass das bewegliche Objekt 160 in diesem Beispiel ein Hindernis für das Kraftfahrzeug 100 darstellt.

Aufgrund der in der Trainingsphase gesammelten Daten und Informationen kann die Kamera 220 das bewegliche Objekt 160 rasch erkennen und identifizieren. Die in der Fig. 2 dargestellten Landmarken 150 können zwar ebenfalls als Hindernisse von der Kamera 220 erkannt werden, jedoch stellen sie kein Hindernis für das vorgegebene Kraftfahrzeug 100 dar. Da die Landmarken 150 sich nicht an oder auf der Trajektorie 130 des Kraftfahrzeugs 100 befinden, sind solche Hindernisse zunächst ohne Bedeutung. Der Bereich der Trajektorie 130 ist in den Figuren 2 und 3 als eine Fahrbahn mit gestrichelter Mittellinie angedeutet. Dieser Bereich entspricht vorzugsweise der Formulierung "an oder auf der Trajektorie 130". Die Ausdehnung dieses Bereichs in Querrichtung zur Trajektorie 130 kann unterschiedlich sein. Würde beispielsweise die in Fig. 2 dargestellte Mülltonne auf die Trajektorie 130 geschoben werden, würde die Kamera 220 die nun verschobene Mülltonne als ein weiteres Hindernis für das vorgegebene Kraftfahrzeug 100 erfassen und identifizieren.

Um den Vorgang des autonomen Manövrierens zu dem Parkplatz 140 fortsetzen beziehungsweise abschließen zu können, muss das bewegliche Objekt 160 als Hindernis entfernt werden. Im Beispiel der Fig. 3 hat die Kamera 220 bereits im Vorfeld, also bevor der zweite Zwischenpunkt 180 erreicht wurde, erkannt, dass der Parkplatz 140 aufgrund des beweglichen Objekts 160 nicht erreicht werden kann. Das Kraftfahrzeug 100 weist insbesondere eine Steuereinheit 200 auf, welche eine Kontrolleinheit 310 für das bewegliche Objekt 160 ansteuern kann. Im Beispiel der Fig. 2 hat das Kraftfahrzeug 100 beziehungsweise die Steuereinheit 200 das bewegliche Objekt 160 als ein Hindernis erkannt. Idealerweise hat die Steuereinheit 200 im Beispiel der Fig. 2 bereits einen Status des beweglichen Objekts 160 festgestellt. Das Feststellen eines Status betreffend das bewegliche Objekt 160 gelingt insbesondere dann sehr zuverlässig, wenn das Kraftfahrzeug 100 in unmittelbarer Nähe des beweglichen Objekts 160 befindlich ist.

Im Beispiel der Fig. 3 hat die Steuereinheit 200 ein Bewegungssignal 320 zum Öffnen des beweglichen Objekts 160 ausgesandt. Dabei kann das Bewegungssignal 320 zum Entfernen des beweglichen Objekts 160 auch zu Beginn des autonomen Manövrierens ausgesendet werden. Die Notwendigkeit zum Aussenden des Signals zum Entfernen des beweglichen Objekts 160 kann insbesondere dann entfallen, wenn das bewegliche Objekt 160 bereits entfernt ist und somit kein Hindernis für das vorgegebene Kraftfahrzeug 100 mehr darstellt. Aufgrund des Bewegungssignals 320 zum Entfernen des beweglichen Objekts 160 wird das bewegliche Objekt 160 in Richtung 300 bewegt. Dies kann beispielsweise ein Zaun sein, der nach rechts verschoben wird, um so eine Einfahrt in eine Garage freizugeben.

Arbeitet die Kamera 220 störungsfrei und ohne Fehler, so wäre theoretisch der Ultraschallsensor 210 entbehrlich. Da jedoch Störungen niemals komplett ausgeschlossen werden können, ist der Einsatz des Ultraschallsensors 210 besonders vorteilhaft und empfehlenswert. Hätte beispielsweise in den Fig. 2 und 3 die Kamera 220 das bewegliche Objekt 160 fälschlicherweise nicht erkannt, so würde der autonome Einparkvorgang zunächst fortgesetzt werden. Im schlimmsten Fall würde es zu einer Kollision zwischen dem Kraftfahrzeug 100 und dem beweglichen Objekt 160 kommen. Um diese Gefahr auf ein Minimum zu reduzieren, ist zusätzlich der Ultraschallsensor 210 vorgesehen. Der kann insbesondere einen Bereich von etwa zwei bis fünf Meter um das Kraftfahrzeug 100 herum zuverlässig abtasten.

Um sicherzustellen, dass das bewegliche Objekt 160 entfernt wurde beziehungsweise nicht länger das Hindernis für das vorgegebene Kraftfahrzeug 100 ist, kann vorgesehen sein, dass das Kraftfahrzeug 100 an dem zweiten Zwischenpunkt 180 anhält. Dieser zweite Zwischenpunkt 180 ist insbesondere an einer Stelle angeordnet, an der der Ultraschallsensor 210 das bewegliche Objekt 160 auf jeden Fall detektieren würde, wenn es als Hindernis ausgebildet ist. Würde sich im Beispiel von Fig. 2 das Kraftfahrzeug 100 an dem zweiten Zwischenpunkt 180 befinden, so würde an dieser Stelle der Ultraschallsensor 210 das als Hindernis ausgebildete bewegliche Objekt 160 erkennen. Eine eventuelle Fehlanalyse der Kamera 220 könnte so rechtzeitig erkannt werden, bevor es zu einer Kollision kommen würde.

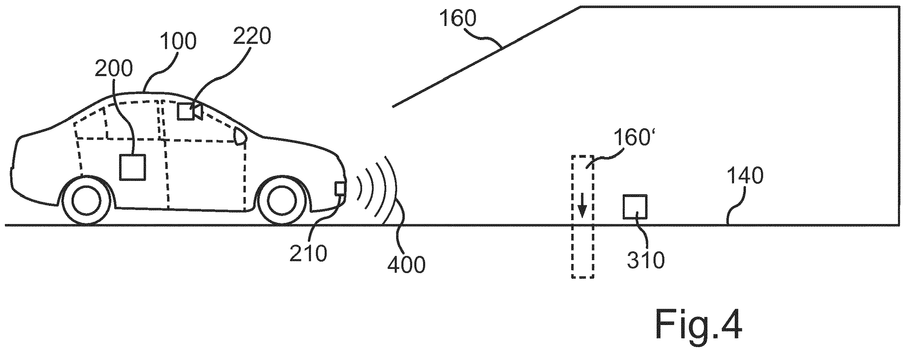

In Fig. 4 ist beispielhaft dargestellt, wie die Kamera 220 und der Ultraschallsensor 210 in besonderen Situationen effektiv zusammenwirken können. In Fig. 4 befindet sich das Kraftfahrzeug 100 bereits sehr nahe an dem beweglichen Objekt 160 beziehungsweise dem Parkplatz 140. In der Fig. 4 ist das bewegliche Objekt 160 als Garagentor ausgebildet. In diesem Fall ist das Garagentor nicht geschlossen, aber auch nicht vollständig geöffnet. Eine solche Zwischenstellung könnte beispielsweise durch eine Störung während des Öffnens des Garagentores aufgetreten sein. Im Beispiel der Fig. 4 tastet der Ultraschallsensor 210 mit ausgesandten Ultraschallsignalen 400 insbesondere einen Bereich ab, der nur einer geringen Höhe über dem Boden entspricht. Da das Garagentor in diesem Fall bereits teilweise geöffnet ist, erkennt der Ultraschallsensor 210 kein Hindernis. Jedoch erkennt die Kamera 220, dass das Garagentor beziehungsweise das bewegliche Objekt 160 sich noch nicht vollständig geöffnet hat. In diesem Fall würde die Kamera 220 den Ultraschallsensor 210 korrigieren. Da der Ultraschallsensor 210 kein Hindernis erfassen würde, die Kamera 220 jedoch ein Hindernis registriert, würde dies auf eine Zwischenstellung des beweglichen Objekts 160 deuten. Durch das Zusammenwirken der beiden Sensoren, der Kamera 220 und des Ultraschallsensors 210, können unterschiedliche Status betreffend das bewegliche Objekt 160 erkannt werden.

In den Beispielen der Fig. 2 und 3 kann der Ultraschallsensor 210 die Kamera 220 hilfreich unterstützen. Im Beispiel der Fig. 4 ist es genau anders herum. Hier korrigiert die Kamera 220 den Ultraschallsensor 210. Es ist vorzugsweise vorgesehen, dass das bewegliche Objekt 160 nur dann als entfernt gilt, wenn beide Sensoren, die Kamera 220 und der Ultraschallsensor 210, kein Hindernis erfassen. Dadurch kann die Zuverlässigkeit hinsichtlich des Erfassens und Erkennens von entfernten beweglichen Objekten 160 gesteigert werden. Dies ist insbesondere bei autonomen Einparkvorgängen äußerst hilfreich, da hier kein menschlicher Fahrer korrigierend eingreifen kann.

Das bewegliche Objekt 160 kann auch als ein Sperrpfosten 160' ausgebildet sein, der im Boden versenkbar ist. Würde der versenkbare Sperrpfosten 160' nicht weitgehend eingefahren werden, so könnte es sein, dass die Kamera 220 den versenkbaren Sperrpfosten 160' fälschlicherweise nicht länger als ein Hindernis erfasst. Auch in diesem Fall kann der Ultraschallsensor 210 korrigierend zum Einsatz kommen. Er könnte den noch nicht ganz versenkten Sperrpfosten 160' als ein Hindernis erfassen. Damit lägen der Steuereinheit 200 von der Kamera 220 und dem Ultraschallsensor 210 zwei widersprüchliche Signale hinsichtlich des versenkbaren Sperrpfosten 160' vor. Diese beiden Signale können in einer Logik implementiert werden, welche zusammen ein Zustandssignal betreffend den Status des beweglichen Objektes 160 erzeugen. Vorzugsweise sieht diese Logik vor, dass ein Hindernis auch bereits dann angenommen wird, wenn einer der beiden Sensoren ein Hindernis erfasst.

Zudem ist der Einsatz des Ultraschallsensors 210 sehr sinnvoll, da im Falle eines Stillstands des Kraftfahrzeugs 100 die Möglichkeiten der Bildverarbeitung beziehungsweise Bildauswertung eingeschränkt sein können. Muss das Kraftfahrzeug 100 beispielsweise anhalten, so kann eine dreidimensionale Strukturerkennung aufgrund des stillstehenden Kraftfahrzeugs 100 stark eingeschränkt sein. Im schlimmsten Fall kann die Kamera 220 als Erfassungseinheit ausfallen. In diesem Fall könnte der Ultraschallsensor 210 zumindest einen Bereich von wenigen Metern vor dem Kraftfahrzeug 100 abtasten. Würde dabei kein Hindernis festgestellt werden, so könnte sich das Kraftfahrzeug 100 langsam, das heißt mit einer Geschwindigkeit von wenigen Zentimetern pro Sekunde (ca. 2 - 5 cm/s), wieder in Bewegung setzen. Durch die nun einsetzende Bewegung des Kraftfahrzeugs 100 kann mithilfe der Kamera 220 die Steuereinheit 200 eine unter Umständen unterbrochene dreidimensionale Strukturerkennung fortsetzen. Damit kann der Ultraschallsensor 210 dabei helfen, einen etwaigen Ausfall der Kamera 220 zu überbrücken.

Insgesamt legen diese Beispiele deutlich klar, dass in verschiedenen Fällen die Kamera 220 und der Ultraschallsensor 210 sinnvoll zusammen kombiniert werden können. Die Gefahr, dass ein bewegliches Objekt 160 als Hindernis fälschlicherweise übersehen wird, kann so deutlich reduziert werden.

## Patentansprüche

1. Verfahren zum Erkennen eines Status eines beweglichen Objekts (160) beim zumindest semi-autonomen Manövrieren eines Kraftfahrzeugs (100) entlang einer Trajektorie (130) unter Verwendung einer Steuereinheit (200) und eines Sensorsystems durch Ausführen folgender Verfahrensschritte:
a) Erfassen eines Objekts (160) an oder auf der Trajektorie (130) in einer Trainingsphase in einem ersten Zustand mittels des Sensorsystems,
b) Erfassen des Objekts (160) in einem zweiten Zustand an oder auf der Trajektorie (130) in der Trainingsphase mittels des Sensorsystems,
c) Vergleichen der Ergebnisse aus Schritt a) und Schritt b) sowie Identifizieren des Objekts (160), welches in Schritt a) im ersten Zustand und in Schritt b) im zweiten Zustand erfasst wurde, als das bewegliche Objekt (160),
d) Feststellen des Status des beweglichen Objekts (160) in einer Betriebsphase, wobei das Sensorsystem eine Umgebung des Kraftfahrzeugs (100) erfasst, sowie Erzeugen eines Zustandssignals betreffend den Status des beweglichen Objekts (160), wobei das Sensorsystem mindestens eine Kamera (220) und mindestens einen weiteren Sensor aufweist und die mindestens eine Kamera (220) und der mindestens eine weitere Sensor fortlaufend zusammen eine Umgebung des Kraftfahrzeugs (100) erfassen, wobei das Kraftfahrzeug (100) in der Trainingsphase an einem ersten Zwischenpunkt (170) zum Stehen gebracht wird, **dadurch gekennzeichnet, dass** an dem ersten Zwischenpunkt (170) der mindestens eine weitere Sensor kein Hindernis erfasst, die mindestens eine Kamera (220) das Hindernis jedoch bereits erfasst hat.

2. Verfahren nach Anspruch 1, wobei der mindestens eine weitere Sensor als mindestens ein Ultraschallsensor (210) ausgebildet ist und der mindestens eine Ultraschallsensor (210) fortlaufend mit der mindestens einen Kamera (220) zusammen die Umgebung des Kraftfahrzeugs (100) erfasst.

3. Verfahren nach einem der vorherigen Ansprüche, wobei das Erfassen in Schritt a) und Schritt b) jeweils anhand mehrerer von der mindestens einen Kamera (220) bereitgestellter Bilder durchgeführt wird.

4. Verfahren nach einem der vorherigen Ansprüche, wobei für den Schritt a) und/oder den Schritt b) eine dreidimensionale Rekonstruktion, eine semantische Aufteilung und/oder ein faltendes neuronales Netzwerk eingesetzt werden.

5. Verfahren nach einem der Ansprüche 2 bis 4, wobei der mindestens eine Ultraschallsensor (210) einen Bereich bis zu einer vorgegebenen Höhe über dem Boden erfasst.

6. Verfahren nach einem der vorherigen Ansprüche, wobei die Steuereinheit (200) in Schritt c) ein Bewegungssignal (320) zum Bewegen des erfassen Objektes (160) an oder auf der Trajektorie (130) erzeugt.

7. Verfahren nach Anspruch 6, wobei nach dem Erzeugen des Bewegungssignals (320) sich das Kraftfahrzeug (100) eine vorgegebene Zeitspanne nicht bewegt.

8. Verfahren nach einem der vorherigen Ansprüche, wobei ein Steuersignal zum autonomen Befahren der Trajektorie (130) durch das Kraftfahrzeug (100) in Abhängigkeit von dem Zustandssignal und/oder eines Abstandes des Kraftfahrzeugs (100) zum beweglichen Objekt (160) erzeugt wird.

9. Verfahren nach einem der vorherigen Ansprüche, wobei im Falle des im ersten Zustand erfassten Objekts (160) an oder auf der Trajektorie (130) in der Betriebsphase die Steuereinheit (200) einen zweiten Zwischenpunkt (180) an oder auf der Trajektorie (130) bestimmt, an dem das Kraftfahrzeug (100) angehalten wird.

10. Verfahren nach Anspruch 9, wobei am zweiten Zwischenpunkt (180) der mindestens eine weitere Sensor das Objekt (160) im ersten Zustand registriert.

11. Verfahren nach einem der Ansprüche 6 oder 7 und 8, wobei das Kraftfahrzeug (100) in der Betriebsphase nach dem Erfassen des Objektes (160) im ersten Zustand das Bewegungssignal (320) zum Bewegen des erfassten Objekts (160) aussendet und die Geschwindigkeit des Kraftfahrzeugs (100) beim autonomen Befahren der Trajektorie (130) reduziert wird.

12. Verfahren nach einem der vorherigen Ansprüche, wobei mehrere Punkte eines in der Trainingsphase zurückgelegten Weges des Kraftfahrzeugs (100) in einer digitalen Karte gespeichert werden.

13. Verfahren nach einem der vorherigen Ansprüche, wobei mehrere Kameras (220) zur Erzeugung einer Rundumsicht und/oder Parksensoren für das Sensorsystem eingesetzt werden.

14. Verfahren nach einem der vorherigen Ansprüche, wobei alternativ oder zusätzlich zu den Schritten b) und c) das bewegliche Objekt (160) dadurch festgestellt wird, dass das Kraftfahrzeug (100) einen Punkt an oder auf der Trajektorie (130) erreicht, der ursprünglich durch das Objekt (160) im ersten Zustand als Hindernis belegt war.

15. System mit einem Kraftfahrzeug (100), einem Sensorsystem und einem beweglichen Objekt (160), das ausgebildet ist ein Verfahren nach einem der vorigen Ansprüche auszuführen.

16. System nach Anspruch 15, wobei das bewegliche Objekt (160) als Garagentor, beweglicher Sperrpfosten (160'), Zaun, Schranke und/oder verschiebbare Wand ausgebildet ist.

17. System nach den Ansprüchen 15 oder 16, wobei das Sensorsystem mindestens einen Ultraschallsensor (210), einen Lidar-Sensor, einen Laser Scanner und/oder einen Radarsensor aufweist.

18. Computerprogrammprodukt mit Programmcodemitteln, welche in einem computerlesbaren Medium gespeichert sind, um das Verfahren nach einem der vorigen Ansprüche durchzuführen, wenn die Programmcodemittel auf einem Prozessor der elektronischen Steuerungseinheit des Anspruchs 1 ausgeführt werden.

19. Fahrerassistenzsystem, das ausgebildet ist, ein Verfahren nach den Ansprüchen 1 bis 14 auszuführen, wobei ein Steuersignal zum autonomen Manövrieren des Kraftfahrzeugs (100) in Abhängigkeit von dem Zustandssignal und/oder eines Abstandes des Kraftfahrzeugs (100) zum beweglichen Objekt (160) erzeugt wird.

## Claims

1. Method for detecting the status of a moving object (160) during the at least semi-autonomous manoeuvring of a motor vehicle (100) along a trajectory (130) by using a control unit (200) and a sensor system, by carrying out the following method steps:
a) detecting an object (160) in a first state in or on the trajectory (130) by means of the sensor system in a training phase,
b) detecting the object (160) in a second state in or on the trajectory (130) by means of the sensor system in the training phase,
c) comparing the results from step a) and step b) and identifying the object (160) which was detected in the first state in step a) and in the second state in step b) as the moving object (160),
d) determining the status of the moving object (160) in an operating phase, wherein the sensor system detects an area surrounding the motor vehicle (100), and generating a status signal relating to the status of the moving object (160), wherein the sensor system has at least one camera (220) and at least one further sensor, and the at least one camera (220) and the at least one further sensor together continuously detect an area surrounding the motor vehicle (100), wherein the motor vehicle (100) is brought to a standstill at a first intermediate point (170) in the training phase, **characterized in that** at the first intermediate point (170), the at least one further sensor detects no obstacle but the at least one camera (220) has already detected the obstacle.

2. Method according to Claim 1, wherein the at least one further sensor is formed as at least one ultrasonic sensor (210), and the at least one ultrasonic sensor (210) continuously detects the area surrounding the motor vehicle (100) together with the at least one camera (220) .

3. Method according to one of the preceding claims, wherein the detection in step a) and step b) is in each case carried out by using a plurality of images provided by the at least one camera (220).

4. Method according to one of the preceding claims, wherein a three-dimensional reconstruction, a semantic division and/or a convolutional neural network are used for the step a) and/or for the step b).

5. Method according to one of Claims 2 to 4, wherein the at least one ultrasonic sensor (210) detects a region up to a predefined height above the ground.

6. Method according to one of the preceding claims, wherein, in step c), the control unit (200) generates a movement signal (320) for moving the detected object (160) in or on the trajectory (130).

7. Method according to Claim 6, wherein, following the generation of the movement signal (320), the motor vehicle (100) does not move for a predefined time interval.

8. Method according to one of the preceding claims, wherein a control signal for the motor vehicle (100) to autonomously move over the trajectory (130) is generated on the basis of the status signal and/or a distance of the motor vehicle (100) to the moving object (160).

9. Method according to one of the preceding claims, wherein, in the case of the object (160) detected in the first state in or on the trajectory (130), in the operating phase the control unit (200) determines a second intermediate point (180) in or on the trajectory (130), at which the motor vehicle (100) is stopped.

10. Method according to Claim 9, wherein at the second intermediate point (180), the at least one further sensor registers the object (160) in the first state.

11. Method according to one of Claims 6 or 7 and 8, wherein in the operating phase following the detection of the object (160) in the first state, the motor vehicle (100) emits the movement signal (320) to move the detected object (160) and the speed of the motor vehicle (100) when travelling autonomously on the trajectory (130) is reduced.

12. Method according to one of the preceding claims, wherein a plurality of points of a path covered by the motor vehicle (100) in the training phase are stored in a digital map.

13. Method according to one of the preceding claims, wherein a plurality of cameras (220) for generating an all-round view and/or parking sensors are used for the sensor system.

14. Method according to one of the preceding claims, wherein, alternatively or in addition to the steps b) and c), the moving object (160) is determined as a result of the fact that the motor vehicle (100) reaches a point in or on the trajectory (130) which was originally occupied by the object (160) as an obstacle in the first state.

15. System comprising a motor vehicle (100), a sensor system and a moving object (160), which is designed to carry out a method according to one of the preceding claims.

16. System according to Claim 15, wherein the moving object (160) is formed as a garage door, a movable bollard (160'), a hedge, a barrier and/or a displaceable wall.

17. System according to Claim 15 or 16, wherein the sensor system has at least one ultrasonic sensor (210), a lidar sensor, a laser scanner and/or a radar sensor.

18. Computer program product having program code means which are stored in a computer-readable medium in order to carry out the method according to one of the preceding claims when the program code means are executed on a processor of the electronic control unit of Claim 1.

19. Driver assistance system, which is designed to carry out a method according to Claims 1 to 14, wherein a control signal for the autonomous manoeuvring of the motor vehicle (100) is generated on the basis of the status signal and/or a distance of the motor vehicle (100) to the moving object (160).

## Revendications

1. Procédé de reconnaissance d'un état d'un objet mobile (160) lors d'une manoeuvre au moins semi-autonome d'un véhicule automobile (100) le long d'une trajectoire (130) en utilisant une unité de commande (200) et un système de capteur en exécutant les étapes suivantes :
a) détection d'un objet (160) au niveau de ou sur la trajectoire (130) dans une phase d'entraînement dans un premier état au moyen du système de capteur,
b) détection de l'objet (160) dans un deuxième état au niveau de ou sur la trajectoire (130) dans la phase d'entraînement au moyen du système de capteur,
c) comparaison des résultats de l'étape a) et de l'étape b) ainsi qu'identification de l'objet (160), qui a été détecté dans l'étape a) dans le premier état et dans l'étape b) dans le deuxième état, comme étant l'objet mobile (160),
d) spécification de l'état de l'objet mobile (160) dans une phase de fonctionnement, le système de capteur détectant un environnement du véhicule automobile (100), ainsi que génération d'un signal d'état concernant l'état de l'objet mobile (160), le système de capteur possédant au moins une caméra (220) et au moins un capteur supplémentaire et l'au moins une caméra (220) et l'au moins un capteur supplémentaire détectant continuellement ensemble un environnement du véhicule automobile (100), le véhicule automobile (100, dans la phase d'entraînement, étant mis à l'arrêt au niveau d'un premier point intermédiaire (170), **caractérisé en ce qu'**au niveau du premier point intermédiaire (170), l'au moins un capteur supplémentaire ne détecte aucun obstacle, l'au moins une caméra (220) a toutefois déjà détecté l'obstacle.

2. Procédé selon la revendication 1, l'au moins un capteur supplémentaire étant réalisé sous la forme d'au moins un capteur à ultrasons (210) et l'au moins un capteur à ultrasons (210) détectant continuellement l'environnement du véhicule automobile (100) conjointement avec l'au moins une caméra (220).

3. Procédé selon l'une des revendications précédentes, la détection à l'étape a) et à l'étape b) étant respectivement effectuée à l'aide de plusieurs images mises à disposition par l'au moins une caméra (220).

4. Procédé selon l'une des revendications précédentes, une reconstruction tridimensionnelle, une répartition sémantique et/ou un réseau neuronal convolutif étant utilisé pour l'étape a) et/ou l'étape b).

5. Procédé selon l'une des revendications 2 à 4, l'au moins un capteur à ultrasons (210) détectant une zone jusqu'à une hauteur prédéfinie au-dessus du sol.

6. Procédé selon l'une des revendications précédentes, l'unité de commande (200) à l'étape c) générant un signal de mouvement (320) destiné à déplacer l'objet (160) détecté au niveau de ou sur la trajectoire (130).

7. Procédé selon la revendication 6, le véhicule automobile (100) ne se déplaçant pas pendant un intervalle de temps donné après la génération du signal de mouvement (320).

8. Procédé selon l'une des revendications précédentes, un signal de commande servant à la circulation sur la trajectoire (130) de manière autonome par le véhicule automobile (100) en fonction du signal d'état et/ou d'une distance du véhicule automobile (100) par rapport à l'objet mobile (160) étant généré.

9. Procédé selon l'une des revendications précédentes, dans le cas de l'objet (160) détecté dans le premier état au niveau de ou sur la trajectoire (130), dans la phase de fonctionnement, l'unité de commande (200) détermine un deuxième point intermédiaire (180) au niveau de ou sur la trajectoire (130) auquel est arrêté le véhicule automobile (100).

10. Procédé selon la revendication 9, l'au moins un capteur supplémentaire enregistrant l'objet (160) dans le premier état au niveau du deuxième point intermédiaire (180) .

11. Procédé selon l'une des revendications 6 ou 7 et 8, le véhicule automobile (100), dans la phase de fonctionnement après la détection de l'objet (160) dans le premier état, émettant le signal de mouvement (320) destiné à déplacer l'objet (160) détecté et la vitesse du véhicule automobile (100) étant réduite lors de la circulation autonome sur la trajectoire (130).

12. Procédé selon l'une des revendications précédentes, plusieurs points d'un trajet du véhicule automobile (100) parcouru dans la phase d'entraînement étant enregistrés dans une carte numérique.

13. Procédé selon l'une des revendications précédentes, plusieurs caméras (220) destinées à générer une vue panoramique et/ou des capteurs de stationnement étant utilisés pour le système de capteur.

14. Procédé selon l'une des revendications précédentes, en variante ou en complément des étapes b) et c), l'objet mobile (160) étant spécifié en ce que le véhicule automobile (100) atteint un point au niveau de ou sur la trajectoire (130), lequel était occupé initialement par l'objet (160) dans le premier état en tant qu'obstacle.

15. Système comprenant un véhicule automobile (100), un système de capteur et un objet mobile (160), lequel est configuré pour mettre en œuvre un procédé selon l'une des revendications précédentes.

16. Système selon la revendication 15, l'objet mobile (160) étant réalisé sous la forme d'un portail de garage, de potelets de blocage mobiles (160'), d'une clôture, d'une barrière et/ou d'une paroi coulissante.

17. Système selon l'une des revendications 15 ou 16, le système de capteur possédant au moins un capteur à ultrasons (210), un capteur lidar, un dispositif de balayage à laser et/ou un capteur radar

18. Produit de programme informatique comprenant des moyens de code de programme qui sont enregistrés dans un support lisible par ordinateur afin de mettre en œuvre le procédé selon l'une des revendications précédentes lorsque les moyens de code de programme sont exécutés sur un processeur de l'unité de commande électronique de la revendication 1.

19. Système d'assistance au conducteur, lequel est configuré pour mettre en œuvre un procédé selon l'une des revendications 1 à 14, un signal de commande destiné à manoeuvrer le véhicule automobile (100) de manière autonome en fonction du signal d'état et/ou d'une distance du véhicule automobile (100) par rapport à l'objet mobile (160) étant généré.
